# EUROPÄISCHE PATENTSCHRIFT

(11) **EP 3 941 775 B1**
(45) Veröffentlichungstag und Bekanntmachung des Hinweises auf die Patenterteilung: **19.02.2025**
(21) Anmeldenummer: 20746866.1
(22) Anmeldetag: 07.07.2020
(51) Int. Cl.: B60L 3/00, B60L 5/00, B60L 53/14, B60L 53/20, B60L 9/20

(54) **FAHRZEUG MIT STROMABNEHMER**
VEHICLE WITH CURRENT COLLECTOR
VÉHICULE AVEC COLLECTEUR DE COURANT

(30) Priorität: 29.07.2019 DE 102019211230
(43) Veröffentlichungstag der Anmeldung: 26.01.2022
(73) Patentinhaber: Siemens Mobility GmbH, 81739 München (DE); Scania CV AB, 151 87 Södertälje (SE)
(72) Erfinder: ENGDAHL, Henrik, 43649 Askim (SE); MOLTHAN, Helge, 83075 Bad Feilnbach (DE); SOMMER, Holger, 91086 Aurachtal (DE); THORÉN, Christer, 12942 Hägersten (SE)
(74) Vertreter: Siemens Patent Attorneys
(86) Internationale Anmeldenummer: PCT/EP2020/069048
(87) Internationale Veröffentlichungsnummer: WO 2021/018520

(56) Entgegenhaltungen:
- EP-A1- 2 340 957
- WO-A1-2016/068780
- DE-A1- 102012 211 543
- DE-A1- 102013 226 356
- DE-T5- 112013 006 718
- US-A1- 2016 152 129

## Beschreibung

Die Erfindung bezieht sich auf ein Fahrzeug nach dem Oberbegriff des Patentanspruches 1.

In einem Fahrzeug mit einem rein elektrischen Traktionsantrieb oder mit einem hybridelektrischen Traktionsantrieb, bei dem ein Elektromotor beispielsweise mit einem Verbrennungsmotor oder mit einer Brennstoffzelle koppelbar ist, wird der Traktionsantrieb von einem nicht geerdeten Fahrzeugrahmen getragenen. Umfasst das Fahrzeug einen mit dem Traktionsantrieb verbindbaren Stromabnehmer, der zur Einspeisung von Traktionsenergie mit einer zweipoligen Fahrleitung einer geerdeten Fahrleitungsanlage in galvanischen Kontakt bringbar ist, muss das Fahrzeug über ein elektrisches Schutzsystem zur Vermeidung von gefährlichen Berührungsspannungen am Fahrzeugrahmen oder an einem mit diesem leitend verbundenen Fahrzeugteilen verfügen. Das Schutzsystem muss den Fahrzeugrahmen und zum Beispiel den Fahrzeugaufbau elektrisch vom mit der Fahrleitung in galvanischem Kontakt stehenden Traktionsantrieb und Stromabnehmer trennen. Versagt das Schutzsystem, können am Fahrzeugrahmen oder am Fahrzeugaufbau gefährliche Berührungsspannungen auftreten, die bei Berührung durch eine mit Erde verbundene Person zu gefährlichen Körperströmen mit Verletzungs- oder gar Todesfolge führen können.

Dies betrifft sowohl hybridelektrisch getriebene Lastkraftwagen wie sie etwa im Tagebau eingesetzt werden, die nur abschnittsweise galvanisch mit einer Fahrleitungsanlage verbunden sind, als auch Fahrzeuge, wie etwa elektrische Oberleitungsbusse, die dauerhaft galvanisch mit einer Fahrleitungsanlage verbunden sind. Anders als bei schienengebundenen Fahrzeugen, deren Schienenräder eine leitende Verbindung zwischen Fahrzeugrahmen und geerdeten Fahrschienen bilden, sind die Fahrzeugrahmen von Lastkraftwagen und Oberleitungsbussen aufgrund deren gummibereifter Räder nicht geerdet.

Ein Fahrzeug der eingangs genannten Art ist aus der Patentschrift EP 3 036 127 B1 bekannt. Dieses umfasst ein Schutzsystem zur Vermeidung von gefährlichen Berührungsspannungen am Fahrzeugrahmen. Es weist eine erste Schutzstufe, die durch eine elektrisch einfach isolierte Montage wenigstens des Traktionsantriebs am Fahrzeugrahmen gebildet ist, und eine zweite Schutzstufe mit höherer Sicherheit auf, die zusätzlich durch einen zwischen Stromabnehmer und Traktionsantrieb geschalteten, galvanisch trennenden Gleichspannungswandler gebildet ist. Mittels eines Schaltelements ist das Schutzsystem durch wahlweises Zuschalten oder Überbrücken des Gleichspannungswandlers zwischen der ersten und zweiten Schutzstufe umschaltbar. Das Schutzsystem genügt in unterschiedlichen Betriebszuständen des Fahrzeugs, die durch unterschiedliche mögliche Wechselwirkungen zwischen Personen und Fahrzeug charakterisiert sind, unterschiedlichen Sicherheitsanforderungen. In einem ersten Betriebszustand - beispielsweise bei Stillstand des Fahrzeugs - ist es für einen Fahrer oder einen Dritten möglich, Fahrzeugrahmen oder Fahrzeugaufbau von außen zu berühren, ohne gleichzeitig Verletzungen aufgrund mechanischer Gewalteinwirkung zu riskieren; das Risiko einer Verletzung durch Köperströme überwiegt in diesem Betriebszustand. In einem zweiten Betriebszustand - beispielsweise bei hoher Fahrgeschwindigkeit des Fahrzeugs - ist es für Dritte fast unmöglich, Fahrzeugrahmen oder Fahrzeugaufbau von außen zu berühren, ohne dabei Verletzungen durch eine Kollision mit dem Fahrzeug zu riskieren.

EP 2 340 957 A1 offenbart eine Antriebssteuervorrichtung für ein Schienenfahrzeug, die einen Wechselrichter, ein Energiespeicherelement und einen mit dem Energiespeicherelement verbundenen Gleichspannungswandler enthält. Eine Schaltungswähleinheit wählt eine Leistungszufuhr entweder von einer externen Stromversorgung über eine Oberleitungsanlage oder von dem Energiespeicherelement aus und führt sie dem Wechselrichter zu. Ein Umschalten vom Oberleitungsbetrieb in den Energiespeicherbetrieb erfolgt im Notfall bei defekter Oberleitung oder bei defektem Stromabnehmer des Schienenfahrzeugs.

US 2016/152129 A1 offenbart Hybridenergiesystem in einem Fahrzeug, das eine autonome Stromversorgung umfasst und an eine externe Stromversorgungs-Infrastruktur entlang der Route des Fahrzeugs anschließbar ist. Das Fahrzeug ist dafür eingerichtet, in einem autonomen Stromversorgungs-Modus und/oder in einem externen Stromversorgungs-Modus zu arbeiten. Das System umfasst einen ersten Hochspannungsschaltkreis, der einen ersten Traktionsmotor zum Antrieb des Fahrzeugs umfasst, der durch einen ersten Stromwandler mit einem Energiespeichersystem verbunden ist. Es umfasst einen zweiten Hochspannungsschaltkreis, der einen zweiten Traktionsmotor zum Antrieb des Fahrzeugs umfasst, der durch einen zweiten Stromwandler mit einer externen Stromversorgung verbunden werden kann. Der erste Hochspannungsschaltkreis und der zweite Hochspannungsschaltkreis können durch einen dritten, galvanisch nicht trennenden Stromwandler zwischen dem ersten und dem zweiten Stromwandler verbunden werden.

Der Erfindung liegt die Aufgabe zugrunde, ein Fahrzeug der eingangs genannten Art bereitzustellen, das bei Aufrechterhaltung des bekannten Schutzsystems eine verbesserte Leistungsübertragung ermöglicht.

Die Aufgabe wird erfindungsgemäß gelöst durch ein gattungsgemäßes Fahrzeug mit den im kennzeichnenden Teil des Patentanspruches 1 angegebenen Merkmalen. Das Fahrzeug umfasst einen Stromabnehmer zur Einspeisung von Traktionsenergie aus einer zweipoligen Fahrleitungsanlage. Es umfasst ferner einen elektrischen oder hybridelektrischen Traktionsantrieb, der von einem nicht geerdeten Fahrzeugrahmen getragen wird. Des Weiteren umfasst das Fahrzeug einen elektrischen Energiespeicher zur Zwischenspeicherung von eingespeister Traktionsenergie. Über einen ersten Leitungszweig ist der Traktionsantrieb mit dem Stromabnehmer verbindbar. Über einen zweiten Leitungszweig sind der Traktionsantrieb und der Energiespeicher mit dem Stromabnehmer verbindbar, wobei in dem zweiten Leitungszweig ein galvanisch trennender Gleichspannungswandler des Fahrzeugs zwischengeschaltet ist. Dem Traktionsantrieb ist ein erstes Schaltelement zum Öffnen und Schließen des ersten Leitungszweigs vorgeschaltet.

Erfindungsgemäß sind der Traktionsantrieb und der Energiespeicher zusätzlich über einen dritten Leitungszweig mit dem Stromabnehmer verbindbar, in den ein galvanisch nicht trennenden Gleichspannungswandler des Fahrzeugs zwischengeschaltet ist. Hierdurch ist es möglich, den Energiespeicher bei Fahrten mit geringerer Schutzstufe, also bei höheren Fahrgeschwindigkeiten, über den galvanisch nicht trennenden Gleichspannungswandler zu laden. Der Gleichspannungswandler ohne galvanische Trennung kann zur Übertragung hoher Ladeleistungen kleiner und leichter ausgeführt werden als ein entsprechender Gleichspannungswandler mit galvanischer Trennung und ist dazu noch kostengünstiger in der Anschaffung. Der galvanisch trennende Gleichspannungswandler dient der Traktionsversorgung und dem Aufladen des Energiespeichers bei Fahrten mit niedrigen Fahrgeschwindigkeiten, bei welchen eine höhere Schutzstufe gegen Berührungsspannungen erforderlich ist. Der Traktionsantrieb ist in beiden Schutzstufen mit Traktionsenergie aus der Fahrleitungsanlage versorgbar.

Erfindungsgemäß ist dem Traktionsantrieb ein zweites Schaltelement zum Öffnen und Schließen des zweiten und dritten Leitungszweigs und dem galvanisch nicht trennenden Gleichspannungswandler ein drittes Schaltelement zum Öffnen und Schließen des dritten Leitungszweigs vorgeschaltet. Die Anordnung der Schaltelemente erlauben es - manuell über ein Fahrerbedienelement, wie im konkreten Ausführungsbeispiel näher erläutert, oder automatisch gesteuert in Abhängigkeit der erforderlichen Schutzstufe - den Energiefluss über die verschiedenen Leitungszweige freizugeben beziehungsweise zu unterbrechen. Bei erhöhter Schutzstufe sind das erste Schaltelement und das dritte Schaltelement geöffnet, während das zweite Schaltelement geschlossen ist. So kann Traktionsenergie vom Stromabnehmer durch den zweiten Leitungszweig über den Gleichspannungswandler mit galvanischer Trennung in den Energiespeicher und den Traktionsantrieb fließen. Bei geringerer Schutzstufe ist das erste Schaltelement geschlossen und das zweite Schaltelement geöffnet, so dass Traktionsenergie vom Stromabnehmer über den ersten Leitungszweig direkt dem Traktionsantrieb zugeführt werden kann. In dieser geringeren Schutzstufe kann weiterhin Traktionsenergie über den Gleichspannungswandler mit galvanischer Trennung in den Energiespeicher fließen.

Erfindungsgemäß umfasst das Fahrzeug ferner ein Geschwindigkeitsmessgerät zur Erfassung der Fahrzeuggeschwindigkeit, eine Steuereinrichtung, die dazu eingerichtet ist, das erste Schaltelement, das zweite Schaltelement und das dritte Schaltelement derart in Abhängigkeit der gemessenen Fahrzeuggeschwindigkeit anzusteuern, dass unterhalb eines vorgebbaren Schwellenwertes der Fahrzeuggeschwindigkeit das erste Schaltelement und das dritte Schaltelement öffnen und das zweite Schaltelement schließt, und dass oberhalb des Schwellenwertes das erste Schaltelement schließt und das zweite Schaltelement öffnet.

Als Schwellenwert für die Fahrgeschwindigkeit kann beispielsweise 30 km/h vorgegeben werden. Steht das Fahrzeug still oder bewegt es sich mit einer Geschwindigkeit unterhalb des Schwellenwertes, so wird das Schutzsystem in die höhere Schutzstufe mit erhöhter elektrischer Sicherheit geschaltet, da hier die Folgen einer Körperstromverletzung gravierender sind als die einer Körperkollisionsverletzung. Wird der Schwellenwert überschritten, schaltet das Schutzsystem in die niedrigere Schutzstufe, da in diesem Betriebszustand bereits ein Kollisionsunfall einen enormen Personenschaden zur Folge haben dürfte. Anstelle oder zusätzlich zum Geschwindigkeitsmessgerät kann das Fahrzeug auch andere Sensoreinrichtungen zur Erfassung eines Betriebszustands des Fahrzeugs umfassen, wobei deren erfassten Zustandsgrößen entsprechende Schwellenwerte für ein Umschalten zwischen den Schutzstufen zugeordnet sind. So kann ein Strommessgerät zur Erfassung der Stromstärke eines sich bei Energieeinspeisung aus der Fahrleitung ausbildenden Fahrstromes vorgesehen sein, wobei ein Schwellenwert für den bezogenen Fahrstrom oder die eingespeiste Traktionsleistung bestimmt werden kann. Es kann auch ein Türschließsensor zur Erfassung des Schließzustandes einer Fahrzeugtür und/oder ein Sitzbelegungssensor zur Erfassung des Belegungszustandes eines Fahrzeugsitzes und/oder ein Gurtschließsensor zur Erfassung des Schließzustandes eines Sicherheitsgurtes des Fahrzeugsitzes vorgesehen sein, wobei ein Umschalten der Schutzstufe bei von innen geschlossener Fahrzeugtür und/oder bei Belegung eines Fahrzeugsitzes und/oder bei geschlossenem Sicherheitsgurt erfolgt.

In einem bevorzugten Ausführungsbeispiel des erfindungsgemäßen Fahrzeugs sind der Traktionsantrieb und der Energiespeicher sowie jeweils von diesen ausgehend der erste Leitungszweig bis zum ersten Schaltelement, der zweite Leitungszweig bis zum galvanisch trennenden Gleichspannungswandler, und der dritte Leitungszweig einschließlich des galvanisch nicht trennenden Gleichspannungswandlers bis zum dritten Schaltelement gegen den Fahrzeugrahmen mit elektrisch einfacher Isolationsschicht montiert. Ferner sind der Stromabnehmer sowie jeweils von diesem ausgehend der erste Leitungszweig bis zum ersten Schaltelement, der zweite Leitungszweig bis einschließlich des galvanisch trennenden Gleichspannungswandlers, und der dritte Leitungszweig bis zum dritten Schaltelement gegen den Fahrzeugrahmen mit elektrisch doppelter Isolationsschicht montiert. Hierdurch sind Fahrzeugkomponenten, die bei hoher Schutzstufe mit dem hohen Spannungsniveau der Fahrleitungsanlage galvanisch leitend verbunden sind, elektrisch doppelt isoliert, um gefährliche Berührungsspannungen am Fahrzeugrahmen oder an einem mit diesem leitend verbundenen Fahrzeugteil zu vermeiden. Für die übrigen Fahrzeugkomponenten genügt eine elektrisch einfache Isolierung. In einem weiteren bevorzugten Ausführungsbeispiel des erfindungsgemäßen Fahrzeugs ist die Steuereinrichtung ferner dazu eingerichtet, dass oberhalb des Schwellenwertes auch das dritte Schaltelement schließt. Damit kann bei geringerer Schutzstufe die Ladeleistung für den Energiespeicher erhöht werden, indem Energie vom Stromabnehmer über den parallelen, dritten Leitungszweig unter Zwischenschaltung des Gleichspannungswandlers ohne galvanische Trennung fließen kann.

In einem weiteren bevorzugten Ausführungsbeispiel umfasst das erfindungsgemäße Fahrzeug ferner eine Überwachungseinrichtung zur Erfassung und Signalisierung von Isolationsfehlern in der einfachen Isolationsschicht und/oder in der doppelten Isolationsschicht. Zur weiteren Erhöhung der Betriebssicherheit erfindungsgemäßer Fahrzeuge wird die einfache beziehungsweise doppelte Isolierung auf Fehler überwacht. Wird ein Isolationsfehler detektiert und dem Fahrer angezeigt, können umgehend Maßnahmen eingeleitet werden, beispielsweise kann der Fahrer angewiesen werden, das Fahrzeug in eine Werkstatt zu fahren.

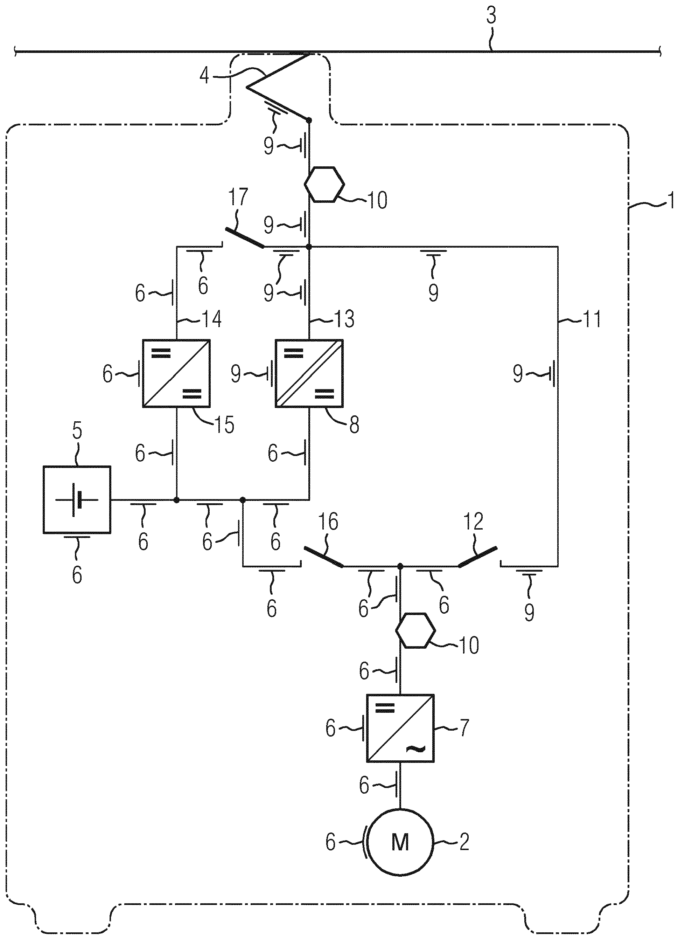

Weitere Eigenschaften und Vorteile der Erfindung ergeben sich aus nachfolgender Beschreibung eines Ausführungsbeispiels anhand der Zeichnung, in deren einziger Figur ein Schaltschema eines erfindungsgemäßen Fahrzeugs mit Schutzsystem veranschaulicht ist.

Gemäß der Figur sind von dem erfindungsgemäßen Fahrzeug 1, das beispielsweise ein schweres Nutzfahrzeug sein kann, an sich bekannte Teile, wie etwa ein Fahrzeugrahmen, welcher Radachsen mit gummibereiften Rädern, eine Fahrerkabine mit Fahrzeugtüren, Fahrzeugsitzen und Sicherheitsgurten sowie einen Fahrzeugaufbau zum Transport von Gütern trägt, nicht dargestellt. Der Fahrzeugrahmen trägt ferner einen Traktionsantrieb 2, der rein elektrisch oder hybridelektrisch ausgebildet sein kann und dessen Drehmoment über ein ebenfalls nicht dargestelltes Getriebe auf Räder übertragbar ist. Für Streckenabschnitte mit einer zweipoligen Fahrleitungsanlage 3, von welcher in der Figur zwei über der Fahrbahn hängende und als Hin- und Rückleiter ausgebildete Fahrdrähte durch eine gemeinsame Linie dargestellt sind, umfasst das Fahrzeug 1 einen Stromabnehmer 4 zur externen Einspeisung von Traktionsenergie. Der Stromabnehmer 4 weist ein anheb- und absenkbares Gestell auf, welches zwei Wippen mit Schleifleisten trägt. Mittels der Schleifleisten wird ein galvanischer Kontakt zwischen Stromabnehmer 4 und Fahrleitungsanlage 3 hergestellt, um Traktionsenergie in das Fahrzeug 1 einzuspeisen oder um Bremsenergie rückzuspeisen. Bei unterbrochenem galvanischem Kontakt zwischen Stromabnehmer 4 und Fahrleitungsanlage 3 oder auf Streckenabschnitten ohne Fahrleitungsanlage 3 kann der hybridelektrische Traktionsantrieb 2 beispielsweise über ein Dieselaggregat oder aus einem Energiespeicher 5 des Fahrzeugs 1, beispielsweise elektrischen Doppelschichtkondensatoren und/oder Batterien, etwa Nickel-Metall-Hydrid-Batterien, mit Traktionsenergie versorgt werden. Der Energiespeicher 5 fasst beispielsweise zwischen 15 kWh und 80 kWh.

Das Fahrzeug weist ein elektrisches Schutzsystem zur Vermeidung von gefährlichen Berührungsspannungen am Fahrzeugrahmen oder an damit elektrisch leitend verbundenen Fahrzeugteilen, etwa einer Fahrerkabine oder einem Fahrzeugaufbau zum Transport von Gütern, auf. Aufgrund des isolierten Aufstandes des Fahrzeugs 1 auf Erde über gummibereifte Räder ist der Fahrzeugrahmen nicht geerdet. Damit es bei hergestelltem galvanischen Kontakt zwischen der der einpolig geerdeten Fahrleitungsanlage 3 und dem Stromabnehmer 4 und damit dem Traktionsantrieb 2 nicht zu gefährlichen Berührungsspannungen am Fahrzeugrahmen kommen kann, sieht das Schutzsystem eine elektrische Trennung beziehungsweise Isolation zwischen den leitend mit Stromabnehmer 4 und Traktionsantrieb 2 verbindbaren Fahrzeugteilen und den leitend mit dem Fahrzeugrahmen verbundenen Fahrzeugteilen vor. Bei einem Versagen des Schutzsystems kann es bei einem Körperschluss zum Fahrzeugrahmen durch eine auf Erde stehende und das Fahrzeug 1 von außen berührende Person zu lebensbedrohenden Körperströmen kommen. Das Schutzsystem weist eine niedrigere Schutzstufe und eine höhere Schutzstufe auf. Letztere hat eine höhere elektrische Sicherheit vor gefährlichen Berührungsspannungen als die niedrigere Schutzstufe.

Die niedrigere Schutzstufe ist durch eine elektrisch einfach isolierte Montage des Traktionsantriebes 2 am Fahrzeugrahmen gebildet. Zu dem Bereich mit elektrisch einfacher Isolationsschicht 6 gehören neben dem Traktionsantrieb 2 der Energiespeicher 5 sowie ein dem Traktionsantrieb 2 vorgeschalteter Wechselrichter 7 zur Umwandlung von Gleich- in Wechselspannung. Die höhere Schutzstufe ist zusätzlich zur einfachen Isolationsschicht 6 durch einen zwischen Stromabnehmer 4 und Traktionsantrieb 2 geschalteten, galvanisch trennenden Gleichspannungswandler 8 gebildet. Stromabnehmer 4 und galvanisch trennender Gleichspannungswandler 8 gehören zu einem Bereich mit doppelter Isolationsschicht 9.

In der höheren Schutzstufe sind alle mit der Fahrleitungsanlage 3 elektrisch verbundenen Fahrzeugteile zweifach gegen den Fahrzeugrahmen isoliert, entweder durch eine doppelt isolierte Montage oder durch eine galvanische Trennung. Die doppelte Isolation wird durch geeignete Überwachungseinrichtung 10 kontinuierlich überwacht. In der niedrigeren Schutzstufe sind einige oder alle mit der Fahrleitungsanlage 3 elektrisch verbundenen Fahrzeugteile gegen den Fahrzeugrahmen einfach isoliert. Auch diese Isolation kann durch Überwachungseinrichtungen 10 überwacht werden.

Der Traktionsantrieb 2 ist mit dem Stromabnehmer 4 über einen ersten Leitungszweig 11 verbindbar, wobei dem Traktionsantrieb 2 ein erstes Schaltelement 12 zum Öffnen und Schließen des ersten Leitungszweigs 11 vorgeschaltet ist. Der Traktionsantrieb 2 und der Energiespeicher 6 sind mit dem Stromabnehmer 4 über einen zweiten Leitungszweig 13 verbindbar, in den der galvanisch trennende Gleichspannungswandler 8 zwischengeschaltet ist. Der Traktionsantrieb 2 und der Energiespeicher 5 sind mit dem Stromabnehmer 4 parallel über einen dritten Leitungszweig 14 verbindbar, in den ein galvanisch nicht trennender Gleichspannungswandler 15 zwischengeschaltet ist. Dem Traktionsantrieb 2 ist ein zweites Schaltelement 16 zum Öffnen und Schließen des zweiten Leitungszweigs 13 und des dritten Leitungszweigs 14 vorgeschaltet. Dem galvanisch nicht trennenden Gleichspannungswandler 15 ist ein drittes Schaltelement 17 zum Öffnen und Schließen des dritten Leitungszweiges 14 vorgeschaltet. Die Umschaltung zwischen der niedrigeren und höheren Schutzstufe wird durch Betätigen des ersten Schaltelements 12 und des zweiten Schaltelements 16 bewerkstelligt - und zwar in Abhängigkeit davon, ob eine aktuell gemessene Fahrgeschwindigkeit über oder unter einem vorgebbaren Schwellenwert von beispielsweise 30 km/h liegt.

Im Stillstand des Fahrzeugs 1 oder bei Fahrgeschwindigkeiten bis zum Schwellenwert ist es für den Fahrer oder für einen außenstehenden Dritten möglich, das Fahrzeug 1 von außen zu berühren, ohne gleichzeitig andere Gefährdungen mit hohem Schadensausmaß zu riskieren. Bei Fahrgeschwindigkeiten oberhalb des Schwellenwertes ist es für außenstehende Dritte nicht möglich oder fast unmöglich, das Fahrzeug 1 von außen zu berühren, ohne dabei gleichzeitig schwere mechanische Schäden beziehungsweise einen Unfall mit Personenschaden herbeizuführen oder mit hoher Eintrittswahrscheinlichkeit zu riskieren. Weitere Unterscheidungen von Betriebszuständen des Fahrzeugs 1 und zugeordneter Schutzstufen können analog implementiert werden.

Der im Fahrzeug 1 verbaute, galvanisch trennende Gleichspannungswandler 8 wird verwendet, um bei geringen Fahrgeschwindigkeiten den Traktionsantrieb 2 zu versorgen. Dabei ist durch Öffnen des ersten Schaltelements 12 und Schließen des zweiten Schaltelements 16 die höheren Schutzstufe geschaltet, die dem Anfahren und Fahren bei geringen Fahrgeschwindigkeiten dient. Hierdurch kann ein galvanisch trennender Gleichspannungswandler 8 mit vergleichsweise geringer Nennleistung von beispielsweise 30 kW eingesetzt werden. Bei höheren Fahrgeschwindigkeiten wird durch Öffnen des zweiten Schaltelements 16 und Schließen des ersten Schaltelements 12 die niedrigere Schutzstufe geschaltet, indem der galvanisch trennende Gleichspannungswandler 8 durch den ersten Leitungszweig 11 überbrückt und die Traktionsenergie direkt aus der Fahrleitungsanlage 3 entnommen wird. Die Fahrzeugteile mit einfacher Isolationsschicht 6 sind nun nicht mehr durch eine galvanische Trennung vom Bereich doppelter Isolationsschicht 9 sowie der externen Fahrleitungsanlage 3 getrennt.

Der Energiespeicher 5 wird bei niedriger Fahrgeschwindigkeit aus dem Stromabnehmer 4 über den Gleichspannungswandler 8 mit galvanischer Trennung im zweiten Leitungszweig 13 geladen. Daneben wird der Gleichspannungswandler 8 verwendet, um bei geringer Fahrgeschwindigkeit zu fahren. Zusätzlich kann Traktionsenergie aus dem Energiespeicher 5 oder einem Dieselaggregat des Fahrzeugs 1 verwendet werden. Auch bei Fahrgeschwindigkeiten über dem Schwellenwert in der niedrigeren Schutzstufe, wo Traktionsenergie vornehmlich direkt aus der Fahrleitungsanlage 3 über den ersten Leitungszweig 11 entnommen wird, steht die im Energiespeicher 5 vorhandene Energie als Traktionsenergie zur Verfügung. Der Gleichspannungswandler 8 stabilisiert in beiden Schutzstufen die Energieeinspeisung für den Energiespeicher 5. Um den Energiespeicher 5 mit einer höheren Ladeleistung aufladen zu können, wird das dritte Schaltelement 17 geschlossen, so dass Traktionsenergie vom Stromabnehmer 4 über den galvanisch nicht trennenden Gleichspannungswandler 15 im dritten Leitungszweig 14 in den Energiespeicher 5 fließen kann. Ein Gleichspannungswandler 15 ohne galvanische Trennung kann eine Nennleistung von beispielsweise 150 kW übertragen und dabei ein geringes Bauvolumen und Gewicht haben.

Die Umschaltung zwischen den Schutzstufen kann durch automatische Ansteuerung oder auch durch manuelle Betätigung erfolgen. So kann der Fahrer über ein fahrzeugseitiges Bedienelement bei Verlassen des öffentlichen Fahrbereichs und Einfahrt in einen nichtöffentlichen Fahrbereich, in dem durch Unterweisung oder andere technische Maßnahmen ein Berühren des Fahrzeugs von außen durch Dritte ausgeschlossen ist, unabhängig von der Fahrgeschwindigkeit betätigen. Auch ein Umschalten durch Dritte, beispielsweise bei Fahrten in definierten Bereichen, bei verschiedenen Fahrleitungsanlagen oder bei Unfällen, ist über eine fernbetätigbare Bedieneinrichtung möglich.

Bei abgesenktem Stromabnehmer 4 können sowohl das erste Schaltelement 12 als auch das zweite Schaltelement 16 geöffnet werden, um Isolationsfehler auf der Seite des Antriebssystems aufzufinden. Außerdem dient diese Schaltstellung dazu, das Spannungsniveau auf der Antriebssystemseite an das der Fahrleitungsanlage 3 anzupassen, um einen Spannungssprung bei Schalten zwischen den Schutzstufen zu verhindern.

## Patentansprüche

1. Fahrzeug (1), umfassend
- einen Stromabnehmer (4) zur Einspeisung von Traktionsenergie aus einer zweipoligen Fahrleitungsanlage (3),
- einen elektrischen oder hybridelektrischen Traktionsantrieb (2), der von einem nicht geerdeten Fahrzeugrahmen getragen wird,
- einen elektrischen Energiespeicher (5) zur Zwischenspeicherung von eingespeister Traktionsenergie,
- einen den Traktionsantrieb (2) mit dem Stromabnehmer (4) verbindbaren, ersten Leitungszweig (11),
- einen den Traktionsantrieb (2) und den Energiespeicher (5) mit dem Stromabnehmer (4) verbindbaren, zweiten Leitungszweig (13) mit einem zwischengeschalteten, galvanisch trennenden Gleichspannungswandler (8),
- wobei dem Traktionsantrieb (2) ein erstes Schaltelement (12) zum Öffnen und Schließen des ersten Leitungszweigs (11) vorgeschaltet ist,
**gekennzeichnet durch**
- einen den Traktionsantrieb (2) und den Energiespeicher (5) mit dem Stromabnehmer (4) verbindbaren, dritten Leitungszweig (14) mit einem zwischengeschalteten, galvanisch nicht trennenden Gleichspannungswandler (15), wobei dem Traktionsantrieb (2) ein zweites Schaltelement (16) zum Öffnen und Schließen des zweiten und dritten Leitungszweigs (13, 14) vorgeschaltet ist, wobei dem galvanisch nicht trennenden Gleichspannungswandler (15) ein drittes Schaltelement (17) zum Öffnen und Schließen des dritten Leitungszweigs (14) vorgeschaltet ist und wobei der erste, zweite und dritte Leitungszweig (11, 13, 14) parallel verbindbar sind,
- ein Geschwindigkeitsmessgerät zur Erfassung der Fahrzeuggeschwindigkeit, und
- eine Steuereinrichtung, die dazu eingerichtet ist, das erste Schaltelement (12), das zweite Schaltelement (16) und das dritte Schaltelement (17) derart in Abhängigkeit der gemessenen Fahrzeuggeschwindigkeit anzusteuern,
- dass unterhalb eines vorgebbaren Schwellenwertes für die Fahrzeuggeschwindigkeit das erste Schaltelement (12) und das dritte Schaltelement (17) öffnen und das zweite Schaltelement (16) schließt, und
- dass oberhalb des Schwellenwertes das erste Schaltelement (12) schließt und das zweite Schaltelement (16) öffnet. und.

2. Fahrzeug (1) nach Anspruch 1,
- wobei der Traktionsantrieb (2) und der Energiespeicher (5) sowie jeweils von diesen ausgehend der erste Leitungszweig (11) bis zum ersten Schaltelement (12), der zweite Leitungszweig (13) bis zum galvanisch trennenden Gleichspannungswandler (8), und der dritte Leitungszweig (14) einschließlich des galvanisch nicht trennenden Gleichspannungswandlers (15) bis zum dritten Schaltelement (17) gegen den Fahrzeugrahmen mit elektrisch einfacher Isolationsschicht (6) montiert sind, und
- wobei der Stromabnehmer (4) sowie jeweils von diesem ausgehend der erste Leitungszweig (11) bis zum ersten Schaltelement (12), der zweite Leitungszweig (13) bis einschließlich des galvanisch trennenden Gleichspannungswandlers (8), und der dritte Leitungszweig (14) bis zum dritten Schaltelement (17) gegen den Fahrzeugrahmen mit elektrisch doppelter Isolationsschicht (9) montiert sind.

3. Fahrzeug (1) nach Anspruch 1 oder 2,
- wobei die Steuereinrichtung ferner dazu eingerichtet ist, dass oberhalb des Schwellenwertes auch das dritte Schaltelement (17) schließt.

4. Fahrzeug (1) nach einem der Ansprüche 1 bis 3, umfassend
- eine Überwachungseinrichtung (10) zur Erfassung und Signalisierung von Isolationsfehlern in der einfachen Isolationsschicht (6) und/oder in der doppelten Isolationsschicht (9).

## Claims

1. Vehicle (1) comprising
- a current collector (4) for feeding traction energy from a two-pole overhead contact line system (3),
- an electric or hybrid-electric traction drive (2), which is carried by a non-earthed vehicle frame,
- an electrical energy storage device (5) for intermediate storage of traction energy that is fed in,
- a first line branch (11) that can connect the traction drive (2) to the current collector (4),
- a second line branch (13) which can connect the traction drive (2) and the energy storage device (5) to the current collector (4) and a galvanically isolating DC converter (8) is interposed in said second line branch,
- wherein a first switching element (12) for opening and closing the first line branch (11) is connected upstream of the traction drive (2),
**characterised by**
- a third line branch (14) which can connect the traction drive (2) and the energy storage device (5) to the current collector (4) with a galvanically non-isolating DC converter (15) is interposed in said third line branch, wherein a second switching element (16) for opening and closing the second and third line branch (13, 14) is connected upstream of the traction drive (2), wherein a third switching element (17) of opening and closing the third line branch (14) is connected upstream of the galvanically non-isolating DC converter (15) and wherein the first, second, and third line branches (11, 13, 14) can be connected in parallel,
- a speed measuring device for detecting the vehicle speed and
- a control facility that is configured so as to control the first switching element (12), the second switching element (16) and the third switching element (17) in dependence upon the measured vehicle speed in such a manner
- that below a predeterminable threshold value for the vehicle speed, the first switching element (12) and the third switching element (17) open and the second switching element (16) closes, and
- that above the threshold value the first switching element (12) closes and the second switching element (16) opens and.

2. Vehicle (1) according to claim 1,
- wherein the traction drive (2) and the energy storage device (5) and, leading respectively therefrom, the first line branch (11) up to the first switching element (12), the second line branch (13) up to the galvanically isolating DC converter (8), and the third line branch (14) including the galvanically non-isolating DC converter (15) up to the third switching element (17) are mounted against the vehicle frame with an electrically simple isolation layer (6), and
- wherein the current collector (4) and, leading respectively therefrom, the first line branch (11) up to the first switching element (12), the second line branch (13) up to and including the galvanically isolating DC converter (8), and the third line branch (14) up to the third switching element (17) are mounted against the vehicle frame with an electrically double isolation layer (9).

3. Vehicle (1) according to claim 1 or 2,
- wherein the control facility is moreover configured so that the third switching element (17) also closes above the threshold value.

4. Vehicle (1) according to one of claims 1 to 3, comprising
- a monitoring facility (10) for detecting and signalling insulation faults in the single isolation layer (6) and/or in the double isolation layer (9).

## Revendications

1. Véhicule (1), comprenant
- un appareil (4) de prise de courant pour l'alimentation en énergie de traction à partir d'une installation (3) de caténaire bipolaire,
- un entraînement (2) de traction électrique ou électrique hybride, qui est porté par un châssis de véhicule, qui n'est pas mis à la terre,
- un accumulateur (5) d'énergie électrique pour l'accumulation tampon d'énergie de traction d'alimentation,
- une première branche (11) de ligne pouvant connecter l'entraînement (2) de traction à l'appareil (4) de prise de courant,
- une deuxième branche (13) de ligne pouvant connecter l'entraînement (2) de traction et l'accumulateur (5) d'énergie à l'appareil (4) de prise de courant et ayant un convertisseur (8) de tension continue monté intermédiairement et séparant galvaniquement,
- dans lequel, en amont de l'entraînement (2) de traction, est monté un premier élément (12) de coupure pour l'ouverture et la fermeture de la première branche (11) de ligne,
**caractérisé par**
- une troisième branche (14) de ligne pouvant connecter l'entraînement (2) de traction et l'accumulateur (5) d'énergie à l'appareil (4) de prise de courant et ayant un convertisseur (15) de tension continue monté intermédiairement et ne séparant pas galvaniquement, dans lequel, en amont de l'entraînement (2) de traction est monté un deuxième élément (16) de coupure pour l'ouverture et la fermeture de la deuxième et de la troisième branches (13, 14) de ligne, dans lequel, en amont du convertisseur (15) de tension continue ne séparant pas galvaniquement est monté un troisième élément (17) de coupure pour l'ouverture et la fermeture de la troisième branche (14) de ligne, et dans lequel la première et la deuxième et la troisième branches (11, 13, 14) de ligne peuvent être montées en parallèle,
- un appareil de mesure de la vitesse pour la détection de la vitesse du véhicule, et
- un dispositif de commande, qui est agencé, pour commander le premier élément (12) de coupure et le deuxième élément (16) de coupure et le troisième élément (17) de coupure, en fonction de la vitesse du véhicule mesurée,
- de manière à ouvrir le premier élément (12) de coupure et le troisième élément (17) de coupure et à fermer le deuxième élément (16) de coupure en-dessous d'une valeur de seuil pouvant être donnée à l'avance de la vitesse du véhicule, et
- à fermer le premier élément (12) de coupure et à ouvrir le deuxième élément (16) de coupure au-dessus de la valeur de seuil. et.

2. Véhicule (1) suivant la revendication 1,
- dans lequel l'entraînement (2) de traction et l'accumulateur (5) d'énergie ainsi que, respectivement partant de ceux-ci, la première branche (11) de ligne jusqu'au premier élément (12) de coupure, la deuxième branche (13) de ligne jusqu'au convertisseur (8) de tension continue séparant galvaniquement et la troisième branche (14) de ligne y compris le convertisseur (15) de tension continue ne séparant pas galvaniquement jusqu'au troisième élément (17) de coupure sont montés sur le châssis du véhicule avec une simple couche (6) isolante électriquement, et
- dans lequel l'appareil (4) de prise de courant ainsi que, respectivement partant de celui-ci, la première branche (11) de ligne jusqu'au premier élément (12) de coupure, la deuxième branche (13) de ligne jusqu'à y compris le convertisseur (8) de tension continue séparant galvaniquement et la troisième branche (14) de ligne jusqu'au troisième élément (17) de coupure sont montées sur le châssis du véhicule avec une couche (9) isolante électriquement doublée.

3. Véhicule (1) suivant la revendication 1 ou 2,
- dans lequel le dispositif de commande est agencé, en outre, pour fermer également le troisième élément (17) de coupure au-dessus de la valeur de seuil.

4. Véhicule (1) suivant l'une des revendications 1 à 3, comprenant
- un dispositif (10) de contrôle pour la détection et la signalisation de défauts d'isolation dans la couche (6) simple d'isolation et/ou dans la couche (9) d'isolation doublée.
